# EUROPÄISCHE PATENTANMELDUNG

(11) **EP 2 226 149 A1**
(43) Veröffentlichungstag der Anmeldung: **08.09.2010**
(21) Anmeldenummer: 09003104.8
(22) Anmeldetag: 04.03.2009
(51) Int. Cl.: B23K 15/00, B23K 26/34, B23P 6/00, F01D 5/00

(54) **Zweischritt-Schweissverfahren**

(71) Anmelder: Siemens Aktiengesellschaft, 80333 München (DE)
(72) Erfinder: Anton, Reiner, Dr., 47228 Duisburg (DE); Grüger, Birgit, 44329 Dortmund (DE); Heinecke, Brigitte, Dr., 45468 Mülheim an der Ruhr (DE); Seeger, Dirk Martin, Dr., 13509 Berlin (DE)

(57) **Zusammenfassung**

Bei dem erfindungsgemäßen Verfahren wird das Schweißverfahren in zwei Schritte aufgeteilt, bei dem zuerst das Schweißmaterial (13) vollständig hinzugefügt wird und erst dann in dieses aufgeschmolzen wird.

Dies erhöht die Handhabbarkeit des Schweißverfahrens.

## Beschreibung

Die Erfindung betrifft ein Schweißverfahren nach dem Oberbegriff des Anspruchs 1.

Schweißverfahren werden angewendet, um Bauteile miteinander zu verbinden oder um eine Material- oder Wandaufdickung zu erreichen.
Dies ist z.B. bei betriebsbeanspruchten Gasturbinenteilen, wie Turbinenschaufeln der Fall. Dort hat sich aufgrund von Erosion oder Korrosion eine Verringerung der Wanddicke des gegossenen Teils ergeben, die wieder hergestellt werden muss. Oft ist es jedoch sehr aufwendig mittels der bekannten Schweißverfahren eine Verdickung herzustellen.

Es ist daher Aufgabe der Erfindung dieses zu vereinfachen.

Die Aufgabe wird gelöst durch ein Schweißverfahren gemäß Anspruch 1.

In den Unteransprüchen sind weitere vorteilhafte Maßnahmen aufgelistet, die beliebig miteinander kombiniert werden könne, um weitere Vorteile zu erzielen.

**Es zeigen:**

| | |
|---|---|
| Figur 1, 2, 3, 4 | zeigen verschiedene Stufen des Schweiß-verfahrens |
| Figur 5, 6 | Möglichkeiten eines Konturenaufbaus |
| Figur 7 | eine Gasturbine |
| Figur 8 | eine Turbinenschaufel |
| Figur 9 | eine Brennkammer |
| Figur 10 | eine Liste von Superlegierungen. |

Die Figurenbeschreibung stellen nur Ausführungsbeispiele der Erfindung dar.

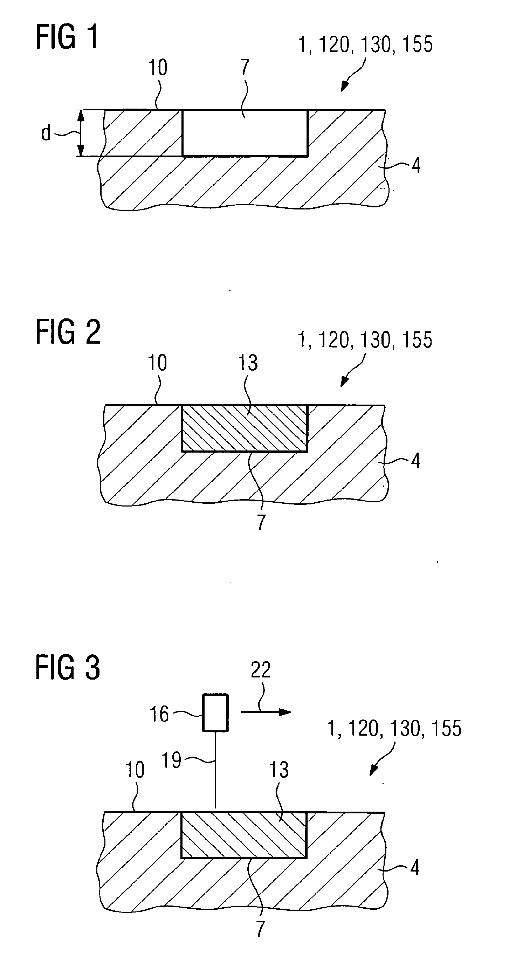

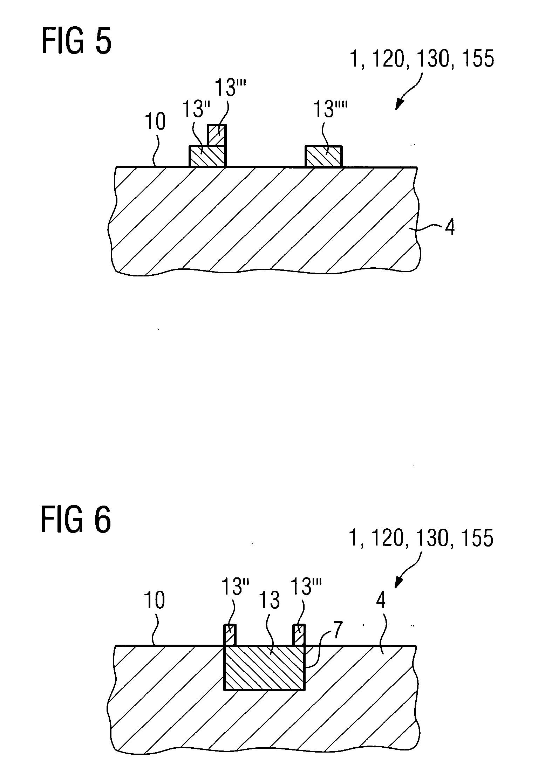

In Figur 1 ist ein Bauteil 1, 120, 130, 155 mit einem Substrat 4 mit einer äußeren, zugänglichen Oberfläche 10 gezeigt, das 4 an einer Stelle ein Riss oder eine Wandverdünnung aufwies, die wieder aufgefüllt werden sollen oder auf dem 4 eine Kontur aufgebaut wird (Fig. 5, 6).
Dieser Bereich ist mit 7 gekennzeichnet oder 7 kennzeichnet eine entsprechend vorpräparierte Stelle, der insbesondere tiefer liegt und vorzugsweise ausgemuldet ist. Der Bereich 7 stellt also auch eine Vertiefung oder eine Mulde dar.

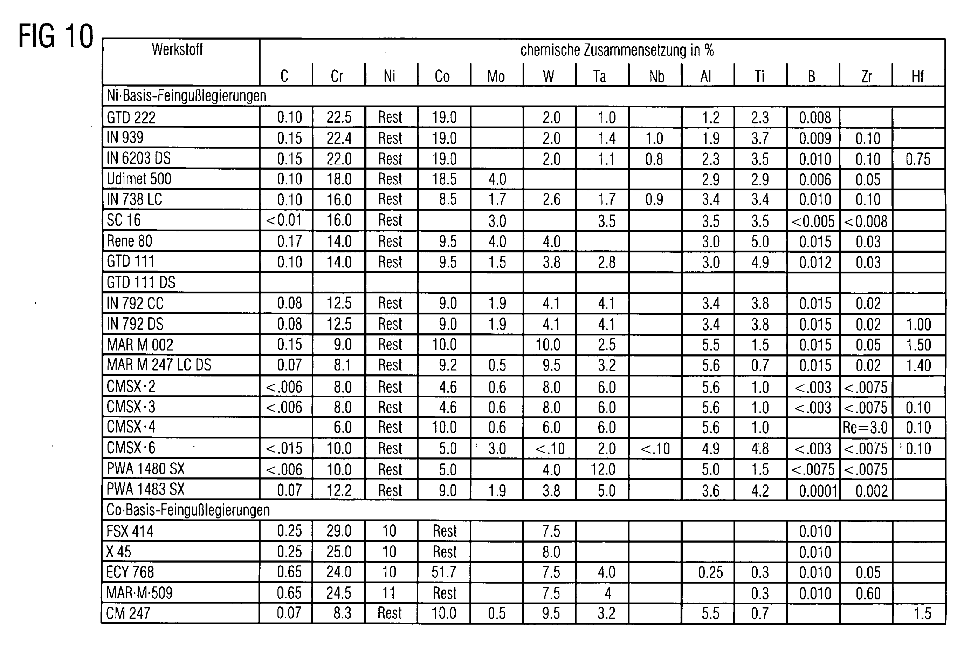

Das Substrat 4 ist vorzugsweise eine nickel- oder kobaltbasierte Superlegierung gemäß Figur 10, insbesondere bei Turbinenschaufeln 120, 130.

In die Vertiefung 7 oder auf den Bereich 7 wird das zu schweißende Material (Schweißmaterial) 13 in einem ersten Schritt vollständig großflächig aufgebracht (Fig. 2).

Das Schweißmaterial 13 kann in Form von Pulver oder auch in Form von Blechen eingelegt werden. Ebenso ist die Aufbringungsart als Folie denkbar, bei dem das Pulver mit oder ohne Binder, vorzugsweise ohne Binder, zusammengepresst ist. Ebenso können vorgesinterte Formen als Schweißmaterial 13, 13' verwendet werden.
Ebenso kann ein nicht-thermisches oder thermisches Spritzverfahren zum Auftrag von Schweißmaterial 13 in/auf dem Bereich 7 verwendet werden.
Weitere Ein- oder Aufbringungsarten sind möglich.

Die Menge des Schweißmaterials 13 ist vorzugsweise so bemessen, dass nach dem Aufschmelzen und dem Erstarren des Schweißmaterials 13 die bisherige Vertiefung 7 entsprechend vollständig in der Höhe d (Tiefe der Vertiefung) aufgefüllt ist.

Erst im zweiten Schritt (Fig. 3) wird ein Schweißgerät 16, vorzugsweise ein Plasmabrenner, ein Laser 16 oder eine Elektrodenstrahlquelle 16 verwendet, der das Schweißmaterial 13 aufschmilzt, so dass es 13 sich mit dem Substrat 4 verbindet. Vorzugsweise muss das Schweißgerät 16 erst angeschaltet werden, wenn das Schweißmaterial 13, 13' aufgebracht ist.

Das Schweißgerät 16, der Laser 16 oder die Elektrodenstrahlquelle 16 wird vorzugsweise einer Verfahrrichtung 22 über das Schweißmaterial 13 verfahren bzw. Substrat 4 und Laser 16 werden gegeneinander verfahren, so dass der Schweißstrahl 19 oder Laserstrahl 19 zumindest die gesamte äußere Fläche des Schweißmaterials 13 erfasst.

Ebenso können mehrere parallele Schweißbahnen erzeugt werden, d.h. der zu schweißende Bereich 7 wird vorzugsweise mäanderförmig mit dem Schweißstrahl 19 des Schweißgeräts 16 abgefahren. Die dabei erzeugten Schweißbahnen können sich überlappen.

Beim Aufschmelzen des Schweißmaterials 13 erfolgt keine weitere Materialzufuhr.

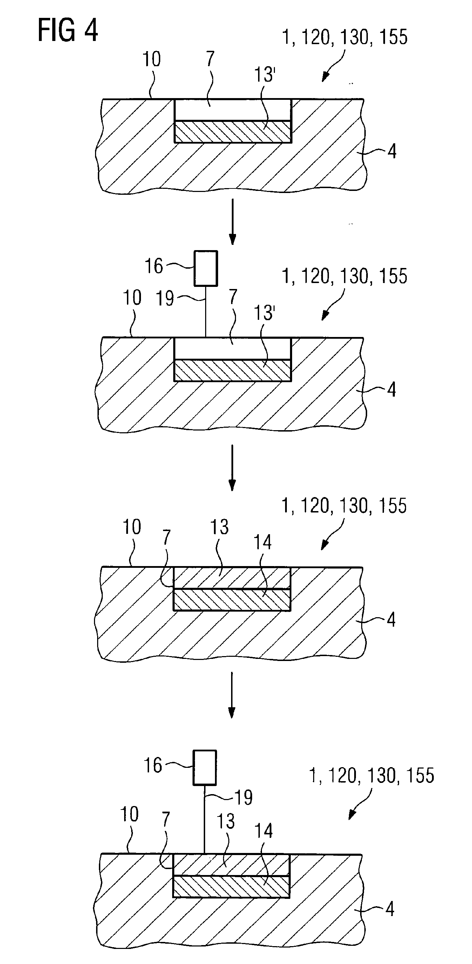

Ebenso ist es möglich, das Verfahren zu wiederholen, also um die Höhe d des Schweißmaterials 13', 13 in zwei Stufen (d/2 + d/2) (Fig. 4) oder mehreren Stufen zu erreichen. Dabei wird auf ein bereits geschweißten und Bereich 14 ( = geschmolzenes und erstarrtes Schweißmaterial 13') neues Schweißmaterial 13 aufgebracht und aufgeschmolzen und erstarren lassen.
Beim Aufschmelzen des Schweißmaterials 13, 13' erfolgt keine weitere Materialzufuhr.

Ebenso kann das Verfahren verwendet werden, um Konturen 13", 13"', 13"" auf einer Oberfläche 10 eines Bauteils aufzubauen.
Dies kann an einer unbeschädigten Stelle des Substrats 4 erfolgen (Fig. 5) oder wo bereits eine andere Schweißung 13, 13', 14 erfolgt ist (Fig. 6). Die Konturen 13", 13"', 13"" können auf oder um die Schweißung 13, 13', 14 angeordnet sein. Konturen heben sich deutlich von der umgebenden Oberfläche 10 auf dem Substrat 4 ab. Dies sind z.B. Dichtspitzen (Fins) oder eine Krone einer Schaufelspitze.

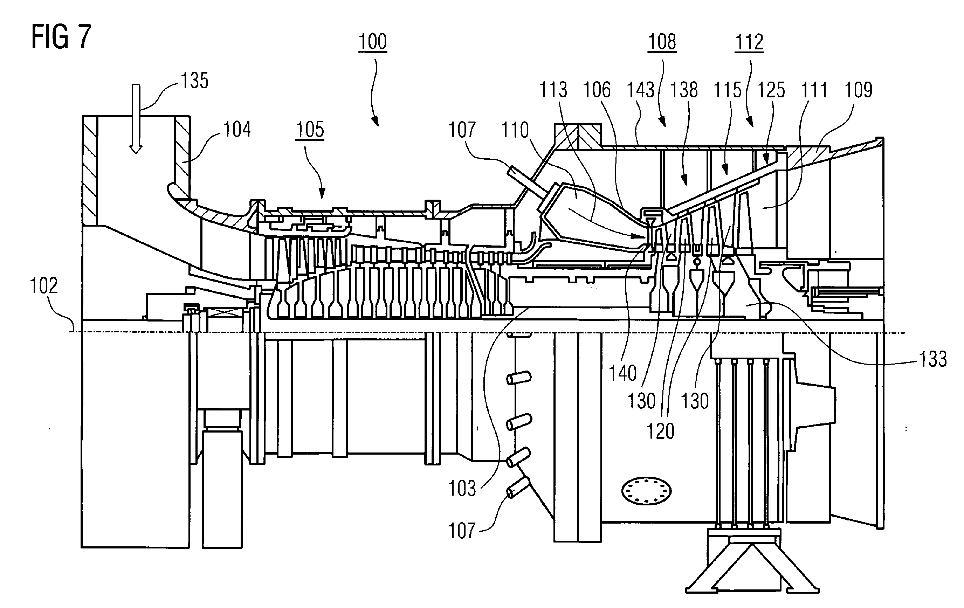

Die Figur 7 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

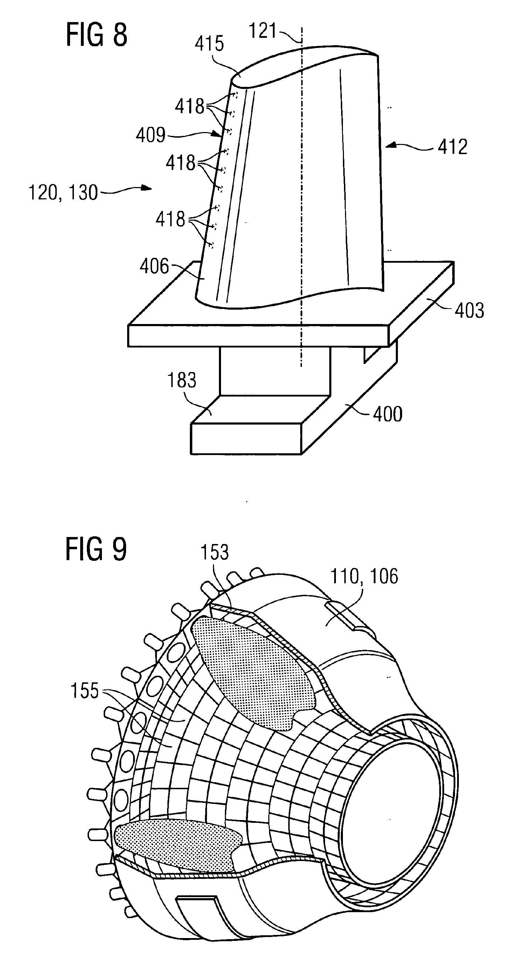

Die Figur 8 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 9 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zum Schweißen eines Bereichs (7),
insbesondere eines tiefer liegenden Bereichs (7),
eines Substrats (4) eines Bauteils (1, 120, 130, 155),
bei dem ein Schweißmaterial (13) und ein Schweißgerät (16) verwendet wird,
**dadurch gekennzeichnet,**
**dass** zuerst das Schweißmaterial (13, 13', 13", 13"', 13"") großflächig auf das Substrat (4) in dem Bereich (7) aufgebracht wird ohne es auf oder anzuschmelzen und dass erst in einem zweiten Schritt das aufgebrachte Schweißmaterial (13, 13', 13", 13"', 13"") durch das Schweißgerät (16) aufgeschmolzen wird.

2. Verfahren nach Anspruch 1,
bei dem das Schweißmaterial (13, 13', 13", 13"', 13"") Pulver aufweist.

3. Verfahren nach Anspruch 1,
bei dem das Schweißmaterial (13, 13', 13", 13"', 13"") als Folie aufgebracht wird.

4. Verfahren nach Anspruch 1, 2 oder 3,
bei dem das Schweißmaterial (13, 13', 13", 13"', 13"") durch einen Laser (16) aufgeschmolzen wird.

5. Verfahren nach Anspruch 1, 2 oder 3,
bei dem das Schweißmaterial (13, 13', 13", 13"', 13"") durch eine Elektronenstrahlenquelle (16) aufgeschmolzen wird.

6. Verfahren nach Anspruch 1, 2, 3, 4 oder 5,
bei dem das Schweißgerät (16) oder der Schweißstrahl (19) und das Schweißmaterial (13, 13', 13", 13"', 13"") eine Relativbewegung gegeneinander ausführen.

7. Verfahren nach Anspruch 1, 2, 3, 4, 5 oder 6,
bei dem während des Aufschmelzens des Schweißmaterials (13, 13', 13", 13"', 13"") keine Materialzufuhr stattfindet.

8. Verfahren nach Anspruch 1, 2, 3, 4, 5, 6 oder 7,
bei dem über das aufgeschmolzene (13') und erstarrte Schweißmaterial (14) erneut zuerst großflächig Schweißmaterial (13) aufgebracht wird und das (13) dann aufgeschmolzen wird.

9. Verfahren nach Anspruch 1, 2, 3, 4, 5, 6 oder 7,
bei dem das Schweißmaterial (13) nur einmal aufgebracht wird,
um den Bereich (7) vollständig bearbeitet zu haben.

10. Verfahren nach Anspruch 1, 2, 3, 4, 5, 6, 7, 8 oder 9,
bei dem Konturen (13", 13"', 13"") auf einer Oberfläche (10) des Substrats (4) erzeugt werden.
